# FASCICULE DE BREVET EUROPEEN

(11) **EP 0 407 315 B1**
(45) Date de publication et mention de la délivrance du brevet: **09.06.1993**
(21) Numéro de dépôt: 90420317.1
(22) Date de dépôt: 05.07.1990
(51) Int. Cl.: F04B 43/04, H02K 33/04

(54) **Pompe à membrane**
Membranpumpe
Membrane pump

(30) Priorité: 07.07.1989 FR 8909902
(43) Date de publication de la demande: 09.01.1991
(73) Titulaire: RENA S.A., F-74000 Meythet (FR)
(72) Inventeur: Point, Jacques, F-74000 Annecy (FR); Joulia, Pierre, F-74440 Saint Jorioz (FR)
(74) Mandataire: Gasquet, Denis

(56) Documents cités:
- CH-A- 516 253
- DE-U- 8 534 210

## Description

La présente invention concerne une pompe à membrane, destinée notamment au pompage de gaz tels que l'air, mais applicable aussi au pompage de liquides très volatils.

Plus particulièrement, cette invention se rapporte à une pompe à membrane, dans laquelle un bras vibrant, agissant sur la membrane qui sert à l'aspiration et au refoulement du fluide à pomper, est mis en oscillation par un électro-aimant fixe, alimenté en courant électrique alternatif ou continu, le bras vibrant étant lié par une extrémité au boîtier de la pompe et portant, à son autre extrémité, au moins un aimant permanent situé en regard de l'électro-aimant.

Dans les réalisations connues pour ce genre de pompe à membrane, le bras vibrant est constitué d'une lame d'acier découpée et cambrée, faisant office de ressort. Une extrémité de la lame est rendue solidaire du boîtier de la pompe par des vis, écrous et rondelles. L'autre extrémité de la lame est surmoulée d'une matière plastique, la rendant solidaire d'un ou plusieurs aimants.

Dans une autre réalisation connue et divulguée dans le brevet Suisse n° 516 253, le bras vibrant est constitué d'unelame d'acier ,à laquelle est fixée à l'une des extrémités, une pièce de retenue pour un aimant, tandis qu'à l'autre extrémité, est fixée une pièce support rendue solidaire du boîtier de pompe par un encastrement.

Les réalisations actuelles nécessitent donc un certain nombre de pièces distinctes, d'où une complication de structure et un coût de fabrication assez élevé. De plus, le cambrage de la lame conduit à une structure dissymétrique du bras, qui a pour conséquence une fatigue de la matière et un fluage dans le temps.

La présente invention vise à éliminer ces inconvénients des réalisations connues, en fournissant une pompe à membrane du genre considéré avec un bras vibrant simplifié dans sa structure et son montage, donc procurant une économie de fabrication sensible, tout en évitant le phénomène de fluage dans le temps.

A cet effet, dans la pompe à membrane objet de l'invention, le bras vibrant est constitué d'une seule pièce en matière plastique, avec une tête élargie qui surmoule le ou les aimants permanents, et avec une partie assurant sa fixation dans le boîtier, à l'opposé de ladite tête.

Dans une forme de réalisation préférée de l'invention, la partie assurant la fixation du bras vibrant dans le boîtier comprend deux boucles symétriques, formées par des voiles minces de matière plastique déformable élastiquement, qui sont prévues pour être emmanchées sur des éléments fixes tels que tétons ou axes appartenant au boîtier, tout en faisant office de ressorts. Les formes et épaisseurs de ces boucles, venant de moulage, déterminent ainsi les propriétés mécaniques recherchées du bras vibrant, et elles permettent un montage simple de ce bras dans le boîtier de la pompe, sans vis ni autres organes additionnels de fixation.

Selon une variante de la présente invention, applicable notamment à des pompes de petites dimensions, le bras vibrant en matière plastique est moulé d'une seule pièce avec le boîtier de la pompe, ce qui apporte une simplification constructive supplémentaire.

De toute façon, l'invention sera mieux comprise à l'aide de la description qui suit, en référence au dessin schématique annexe représentant, à titre d'exemple non limitatif, une forme d'exécution de cette pompe à membrane :
Figure 1 est une vue de face d'une pompe à membrane conforme à la présente invention, montrée ouverte pour faire apparaître les organes intérieurs ;
Figure 2 est une vue en coupe longitudinale de cette pompe, suivant II-II de figure 1 ;
Figure 3 est une vue en perspective du bras vibrant seul.

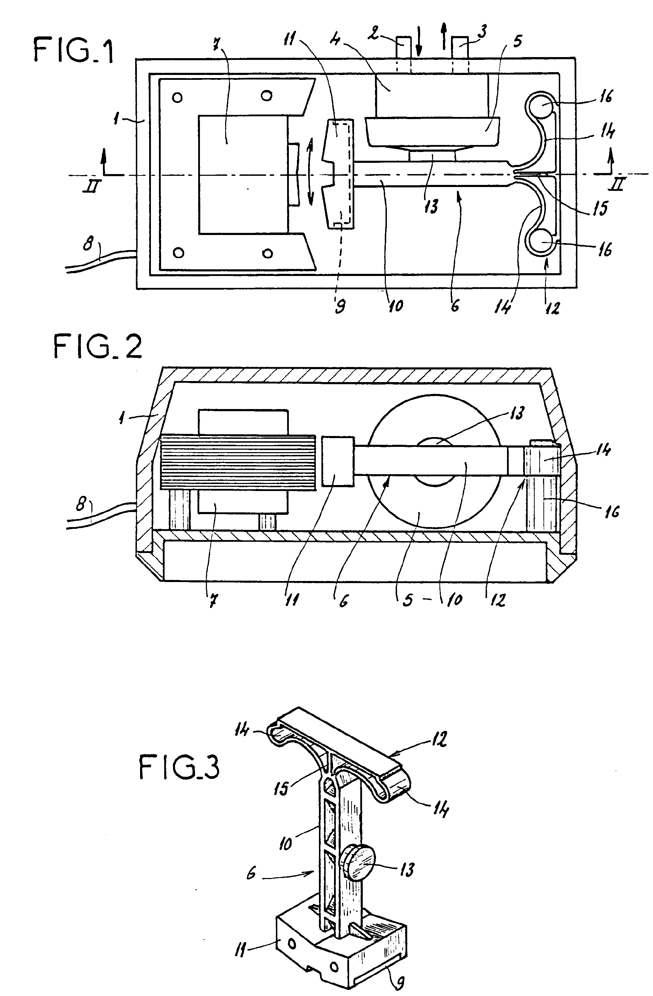

Les figures 1 et 2 montrent une pompe à air, dont les organes sont logés à l'intérieur d'un boîtier de pompe 1 traversé latéralement par une entrée d'air 2 et par une sortie d'air 3. L'entrée d'air 2 et la sortie d'air 3 sont raccordées à un corps de pompe 4, coiffé par une membrane déformable 5. Pour déformer alternativement la membrane 5, il est prévu un bras vibrant 6, mis en oscillation par un électro-aimant fixe 7 dont la bobine est alimentée en courant électrique alternatif ou continu par des conducteurs 8. Le bras vibrant 6 est lié par extrémité au boîtier de pompe 1, d'une matière qui sera précisée plus bas, tandis que son extrémité opposée porte au moins un aimant permanent 9, situé en regard de l'électro-aimant 7. Un point intermédiaire du bras vibrant 6 est lié à la membrane 5.

L'invention concerne plus particulièrement la structure du bras vibrant 6, aussi montré sur la figure 3. Ce bras 6 est constitué d'une seule pièce en matière plastique, dans laquelle on distingue une tige allongée 10, une tête élargie 11 et, à l'opposé de la tête 11, un pied 12 pour la fixation dans le boîtier 1.

La tige allongée 10, rendue relativement rigide par l'épaisseur de la matière plastique, comporte vers le milieu de sa longueur un téton latéral 13 assurant la liaison du bras vibrant 6 avec la membrane 5. La tête élargie 11 surmoule le ou les aimants permanents 9.

Le pied 12 du bras vibrant 6 est formé au contraire par des voiles de matière plastique relativement minces, permettant une déformation élastique. Ces voiles minces de matière plastique forment notamment deux boucles symétriques 14, et il est encore prévu une voile de matière central 15, situé dans le plan de symétrie des deux boucles 14 et se raccordant à ces deux boucles 14.

Les deux boucles symétriques 14 comportent des parties rectilignes s'appliquant contre une face interne du boîtier 1, et des parties incurvées prévues pour être emmanchées sur des éléments fixes 16 de formes complémentaires, tels que tétons ou axes, appartenant au boîtier 1.

La pompe à membrane, ici décrite, est applicable entre autres comme aérateur pour aquarium.

Bien entendu, l'invention ne se limite pas à la seule forme d'exécution de cette pompe à membrane qui a été décrite ci-dessus, à titre d'exemple.; En particulier, l'on ne s'éloignerait pas du cadre de l'invention :
- par des modifications constructives, concernant par exemple les détails de forme du bras vibrant ;
- par des adaptations particulières, telles que la réalisation d'une pompe pourvue de deux bras vibrants réalisés et fixés selon le principe de la présente invention ;
- par toutes variantes concernant l'alimentation électrique de l'électro-aimant, qui est réalisable soit en courant alternatif fourni par le secteur, soit en courant continu fourni par des piles ou des batteries ;
- par une utilisation différente, telles que le pompage de gaz autres que de l'air, voire de liquides très volatils.

## Revendications

1. Pompe à membrane, pour le pompage de gaz ou de liquides très volatils, dans laquelle un bras vibrant (6), agissant sur la membrane (5) qui sert à l'aspiration et au refoulement du fluide à pomper, est mis en oscillation par un électro-aimant fixe (7) alimenté en courant électrique alternatif ou continu, le bras vibrant (6) étant lié par une extrémité au boîtier (1) de la pompe et portant, à son autre extrémité, au moins un aimant permanent (9) situé en regard de l'électro-aimant (7), caractérisée en ce que le bras vibrant (6) est constitué d'une seule pièce en matière plastique, avec une tête élargie (11) qui surmoule le ou les aimants permanents (9), et avec une partie (12) assurant sa fixation dans le boîtier (1), à l'opposé de ladite tête (11).

2. Pompe à membrane selon la revendication 1, caractérisée en ce que la partie assurant la fixation du bras vibrant (6) dans le boîtier (1) comprend deux boucles symétriques (14), formées par des voiles minces de matière plastique déformables élastiquement, qui sont prévues pour être emmanchées sur des éléments fixes (16) tels que tétons ou axes appartenant au boîtier (1), tout en faisant office de ressorts.

3. Pompe à membrane selon la revendication 2, caractérisée en ce que les deux boucles symétriques (14) comportent des parties rectilignes s'appliquant contre une face interne du boîtier (1), et des parties incurvées prévues pour être emmanchées sur les éléments fixes (16) tels que tétons ou axes.

4. Pompe à membrane selon la revendication 2 ou 3, caractérisée en ce qu'il est prévu encore un voile de matière central (15), situé dans le plan de symétrie des deux boucles (14) et se raccordant à ces deux boucles (14).

5. Pompe à membrane selon la revendication 1, caractérisée en ce que le bras vibrant (6) en matière plastique est moulé d'une seule pièce avec le boîtier (1) de la pompe.

## Patentansprüche

1. Membranpumpe zum Pumpen von Gas oder hochflüchtigen Flüssigkeiten, in der ein Schwingungsarm (6), der auf die Membran (5) einwirkt, die zum Ansaugen und Ausstoßen des zu pumpenden Fluids dient, durch einen mit elektrischem Wechsel- oder Gleichstrom betriebenen feststehenden Elektromagneten (7) in Schwingungen versetzt wird, wobei der Schwingungsarm (6) mit einem Ende am Gehäuse (1) der Pumpe befestigt ist und an seinem anderen Ende wenigstens einen Permanentmagneten (9) trägt, der dem Elektromagneten (7) gegenüberliegend angeordnet ist, **dadurch gekennzeichnet,** daß der Schwingungsarm (6) einstückig aus Kunststoff mit einem verbreiterten Kopf (11), der den oder die Permanentmagneten (9) überdeckt, und mit einem diesem Kopf (11) gegenüberliegenden Abschnitt (12) ausgebildet ist, der seine Befestigung im Gehäuse (1) gewährleistet.

2. Membranpumpe nach Anspruch 1, dadurch gekennzeichnet, daß der die Befestigung des Schwingungsarms (6) im Gehäuse (1) gewährleistende Teil zwei symmetrische Schlaufen (14) umfaßt, die durch dünne, elastisch verformbare Kunststoffstege gebildet sind, die zum Aufstecken auf feststehende Elemente (16), wie zum Gehäuse (1) gehörende Zapfen oder Achsen, dienen und als Federn wirken.

3. Membranpumpe nach Anspruch 2, dadurch gekennzeichnet, daß die zwei symmetrischen Schlaufen (14) geradlinige Abschnitte, die sich gegen eine Innenfläche des Gehäuses (1) anlegen, sowie gebogene Abschnitte aufweisen, die zum Aufstecken auf die feststehenden Elemente (16), wie Zapfen oder Achsen, dienen.

4. Membranpumpe nach Anspruch 2 oder 3, dadurch gekennzeichnet, daß noch ein mittiger Materialsteg (15) vorgesehen ist, der in der Symmetrieebene der zwei Schlaufen (14) liegt und mit diesen zwei Schlaufen (14) verbunden ist.

5. Membranpumpe nach Anspruch 1, dadurch gekennzeichnet, daß der Schwingungsarm (6) aus Kunststoff einstückig mit dem Gehäuse (1) der Pumpe gegossen ist.

## Claims

1. Diaphragm pump for pumping gases or highly volatile liquids, in which a vibrating arm (6), acting on the diaphragm (5) serving to draw in and drive out the fluid to be pumped, is caused to oscillate by a fixed electromagnet (7) supplied with AC or DC electric current, the vibrating arm (6) being connected at one end to the casing (1) of the pump and carrying, at its other end, at least one permanent magnet (9) situated opposite the electromagnet (7), characterised in that the vibrating arm (6) is formed, in a single piece, from plastic material, with a broadened head (11) which is moulded over the permanent magnet or magnets (9), and with a part (12) providing its fixing in the casing (1), opposite the said head (11).

2. Diaphragm pump according to Claim 1, characterised in that the part providing the fixing of the vibrating arm (6) in the casing (1) comprises two symmetrical loops (14), formed by thin sheets of elastically deformable plastic, which are designed to be fitted onto fixed components (16) such as studs or pins forming part of the casing (1), whilst serving as springs.

3. Diaphragm pump according to Claim 2, characterised in that the two symmetrical loops (14) have rectilinear parts pressed against an internal face of the casing (1), and curved parts designed to be fitted onto the fixed components (16) such as studs or pins.

4. Diaphragm pump according to Claim 2 or 3, characterised in that a central sheet of material (15) is also provided, situated in the symmetry plane of the two loops (14) and connected to these two loops (14).

5. Diaphragm pump according to Claim 1, characterised in that the plastic vibrating arm (6) is moulded in one piece with the pump casing (1).
